# EUROPÄISCHE PATENTANMELDUNG

(11) **EP 4 574 719 A1**
(43) Veröffentlichungstag der Anmeldung: **25.06.2025**
(21) Anmeldenummer: 24214009.3
(22) Anmeldetag: 19.11.2024
(51) Int. Cl.: B65G 47/08, B65G 47/82, B65G 47/84

(54) **TRANSPORTSTRECKE UND VERFAHREN ZUR GESCHOBENEN BEFÖRDERUNG VON ARTIKELN**

(30) Priorität: 18.12.2023 DE 102023135618
(71) Anmelder: Krones Aktiengesellschaft, 93073 Neutraubling (DE)
(72) Erfinder: KREIS, Marcus, 93073 Neutraubling (DE); HAIDACHER, Peter, 93073 Neutraubling (DE); SPINDLER, Herbert, 93073 Neutraubling (DE)
(74) Vertreter: Benninger Patentanwaltskanzlei

(57) **Zusammenfassung**

Es sind eine Transportstrecke (10) sowie ein Verfahren zur geschobenen Beförderung einer Vielzahl von gleichartigen Artikeln (12) offenbart.

Die Transportstrecke (10) umfasst eine für einen mehrreihigen Transport der Artikel (12) vorgesehene horizontale Auflageebene (24) und eine in einer Transportrichtung (14) der Artikel (12) bewegliche Schubeinrichtung (26) zur rückseitigen Anlage an die Artikel (12) und zur Erzeugung einer auf die Artikel (12) einwirkenden Vorschubbewegung in Transportrichtung (14).

Der Transportstrecke (10) ist eine Impulseinleitungseinrichtung (44) zur Einleitung von mechanischen Impulsen zumindest in Teilbereiche der horizontalen Auflageebene (24) und/oder in die Schubeinrichtung (26) zugeordnet.

Bei dem Verfahren verbringt eine rückseitig an den Artikeln (12) anliegende und diese in eine Transportrichtung (14) schiebende bewegliche Schubleiste (28) die mehrreihig auf der Transportstrecke (10) beförderten Artikel (12) in eine hexagonale Anordnung (38) zueinander.

## Beschreibung

Die vorliegende Erfindung betrifft eine Transportstrecke sowie ein Verfahren zur geschobenen Beförderung einer Vielzahl von gleichartigen Artikeln.

Bei der Handhabung und Verpackung von Artikeln oder Behältern werden diese oftmals zu größeren Verpackungseinheiten zusammengefasst, die auch als Gebinde bezeichnet werden, gebildet durch eine kleinere oder größere Anzahl an mechanisch zusammengehaltenen Artikeln oder Behältern. Der Zusammenhalt der Behälter kann bspw. durch eine Schrumpffolienumhüllung, durch eine Umreifung, durch Kartonverpackungen o. dgl. gewährleistet werden.

Die relative Anordnung der Artikel oder Behälter zueinander kann hierbei durch den Begriff der Rechteckanordnung charakterisiert werden, bei der die Artikel in regelmäßigen Reihen nebeneinander angeordnet und solchermaßen zusammengefasst und fixiert sind. Um jedoch Artikel oder Behälter mit abschnittsweise zylindrischen Formen wie bspw. Getränkedosen oder Getränkeflaschen möglichst platzsparend und mit möglichst geringer Relativbeweglichkeit zueinander zusammenzufassen, kann es sinnvoll sein, von einem solchen Rechteckverbund abzuweichen und bspw. eine hexagonale Anordnung zu wählen, die auch als genestete Anordnung oder als dichte Kugelpackung bezeichnet werden kann. Hierbei stehen die zylindrischen Artikel oder Behälter jeweils derart in Reihen versetzt zueinander, dass die zwischen den Artikeln gebildeten Lücken möglichst gering ausfallen. Eine solche Waben- oder Kugelanordnung stellt einen Verbund einer gegebenen Anzahl an zylindrischen Artikeln mit der geringstmöglichen Grundfläche dar.

Um einen solche Artikelanordnung zu erzielen, können die Artikel bspw. reihenweise in Transportrichtung verschoben werden, wie es etwa durch die US 6 490 845 B1 beschrieben wird.

Eine zuverlässig arbeitende Einrichtung zur Erzeugung solcher hexagonalen Anordnungen von Behältern findet sich zudem in der DE 10 2010 033 549 A1 beschrieben. Hierbei werden die Behälter entlang eines sich in der Breite reduzierenden Transportweges befördert, wobei mittels einer rückseitig an eine Behältergruppierung angreifenden profilierten Schubleiste jede zweite Behälterreihe in Längsrichtung oder Transportrichtung gegenüber den jeweils benachbarten Behälterreihen versetzt wird. Sofern der Versatz der Hälfte eines Behälterdurchmessers entspricht und sofern die seitlich verdichtete Lage der Behälter zueinander mittels des sich verjüngenden Transportweges in der benötigten Weise gewährleistet wird, ist das erzielte Ergebnis die verdichtete hexagonale Anordnung der solchermaßen behandelten Behältergruppierung.

Sofern jedoch die Behältermantelflächen nur in eingeschränkter Weise aneinander abgleiten können, bspw. aufgrund von erhöhten Haftreibungseffekten zwischen den sich berührenden Mantelflächen, kann die beschriebene Umgruppierung der Behälter an ihre Grenzen stoßen.

Ein vorrangiges Ziel der Erfindung kann darin gesehen werden, auch unter erschwerten Bedingungen, wie sie etwa bei erhöhten Haftreibungswerten zwischen sich berührenden Mantelflächen umzugruppierender Artikel oder Behälter auftreten können, eine zuverlässige Umgruppierung von beförderten Artikelgruppierungen in verdichtete Anordnungen zu ermöglichen. Diese möglichst störungsfreie Umgruppierung soll entlang einer die Artikel befördernden Transportstrecke ermöglicht werden.

Dieses Ziel der Erfindung wird mit den Gegenständen der unabhängigen Ansprüche erreicht. Merkmale vorteilhafter Weiterbildungen der Erfindung lassen sich den jeweiligen abhängigen Ansprüchen entnehmen.

Zur Erreichung des genannten Ziels schlägt die vorliegende Erfindung eine Transportstrecke zur geschobenen Beförderung einer Vielzahl von gleichartigen Artikeln mit den Merkmalen des unabhängigen Anspruchs vor. Die Transportstrecke umfasst eine für einen mehrreihigen Transport der Artikel vorgesehene horizontale Auflageebene sowie eine oberhalb der und in etwa parallel zur horizontalen Auflageebene in einer Transportrichtung der Artikel beweglichen Schubeinrichtung zur rückseitigen Anlage an die Artikel und zur Erzeugung einer auf die Artikel einwirkenden Vorschubbewegung in Transportrichtung.

Die Erfindung sieht vor, dass der Transportstrecke eine Impulseinleitungseinrichtung zur Einleitung von mechanischen Impulsen zumindest in Teilbereiche der horizontalen Auflageebene und/oder in die Schubeinrichtung zugeordnet ist.

Die Schubeinrichtung kann insbesondere eine rückseitig an die geschobenen Artikel anlegbare profilierte Schubleiste aufweisen, vorzugsweise mehrere solcher Schubleisten, die jeweils einzelne und voneinander beabstandete Gruppierungen mit jeweils einer definierten Anzahl von Artikeln schiebend befördern.

Wahlweise kann die Profilierung einer solchen Schubleiste über ihre Längserstreckungsrichtung regelmäßig voneinander beabstandete Vorsprünge zur Anlage an einzelne Artikel und zwischen den Vorsprüngen befindliche Rücksprünge aufweisen.

Die erfindungsgemäß vorgesehene Impulseinleitungseinrichtung kann wahlweise zur Einleitung von einzelnen mechanischen Impulsen zumindest in Teilbereiche der horizontalen Auflageebene vorgesehen und entsprechend ausgestattet sein.

Ebenso denkbar ist es, dass die Impulseinleitungseinrichtung zur Einleitung von einzelnen mechanischen Impulsen zumindest in die Schubeinrichtung vorgesehen und entsprechend ausgestattet ist.

Auch Kombinationen sind denkbar und in der Praxis sinnvoll, d.h. eine Impulseinleitung sowohl in die Auflageebene als auch in die Schubeinrichtung.

In einer weiteren Ausgestaltung der Erfindung kann auch vorgesehen sein, dass die der Transportstrecke zugeordnete Impulseinleitungseinrichtung zur Einleitung von wiederholten mechanischen Impulsen und/oder von Vibrationen zumindest in Teilbereiche der horizontalen Auflageebene und/oder in die Schubeinrichtung vorgesehen und entsprechend ausgestattet ist.

Die Impulseinleitungseinrichtung kann bspw. einen angetriebenen rotierenden Nocken mit einem mechanischen Impulsüberträger umfassen, der mit der horizontalen Auflageebene und/oder mit der Schubeinrichtung gekoppelt sein kann.

Ebenso denkbar ist es, wenn die Impulseinleitungseinrichtung einen elektromagnetisch oder elektromotorisch betriebenen Linearantrieb umfasst, der mit einem oszillierend beweglichen Impulsüberträger zusammenwirkt, welcher mit der horizontalen Auflageebene und/oder mit der Schubeinrichtung gekoppelt ist.

Bei der erfindungsgemäßen Transportstrecke kann vorzugsweise vorgesehen sein, dass an ihren beiden Längsseiten jeweils Führungsleisten vorgesehen sind, deren Abstand sich in Transportrichtung der Artikel reduziert. Solche beidseitigen Geländerführungen können einen sich in Transportrichtungen verjüngenden Transporteur bilden, der in Kombination mit eingeleiteten mechanischen Impulsen zur Verdichtung der Artikel und zur Erzeugung einer sich nestenden Gebindeformation, d.h. einer hexagonalen Anordnung der beförderten Gruppierungen genutzt werden kann.

Sofern aus Sicht des angesprochenen Fachmannes sinnvoll miteinander kombinierbar, können einige der oder alle dieser zuvor genannten Variationen oder Ausführungsvarianten des erfindungsgemäßen Transportstrecke wahlweise auch miteinander kombiniert werden, um das oben formulierte Ziel zumindest teilweise zu erreichen, und/oder um den gewünschten Effekt der Erfindung zu erzielen.

Zur Erreichung des oben genannten Ziels schlägt die Erfindung neben der in unterschiedlichen Ausführungsvarianten erläuterten erfindungsgemäßen Transportstrecke ein Verfahren zur geschobenen Beförderung einer Vielzahl von gleichartigen Artikeln entlang einer horizontalen Transportstrecke mittels wenigstens einer rückseitig an den Artikeln anliegenden und diese in eine Transportrichtung schiebenden beweglichen Schubleiste mit den Merkmalen des unabhängigen Verfahrensanspruchs vor. Die Schubleiste, die bspw. profiliert oder nicht profiliert sein kann, sorgt für eine Verbringung der mehrreihig auf der Transportstrecke beförderten Artikel in eine hexagonale Anordnung zueinander. Erfindungsgemäß ist vorgesehen, dass in eine Auflageebene der Transportstrecke und/oder in die Schubleiste zumindest einzelne mechanische Impulse eingeleitet werden können.

Bei dem Verfahren kann weiterhin vorgesehen sein, dass in die Auflageebene der Transportstrecke und/oder in die Schubleiste wiederholte mechanische Impulse und/oder Vibrationen eingeleitet werden.

In diesem Zusammenhang kann das Verfahren zudem vorsehen, dass die in die Auflageebene der Transportstrecke und/oder in die Schubleiste eingeleiteten mechanischen Impulse und/oder Vibrationen im Zeitablauf ihre Wiederholfrequenz und/oder ihre Impulsstärke verändern.

Bei dem Verfahren kann es zudem sinnvoll sein, wenn die Schubleiste in einer Richtung quer zur Transportrichtung oszillierend bewegt wird. Diese oszillierenden Bewegungen der Schubleiste können durch die eingeleiteten Vibrationen gebildet sein. Es kann aber zusätzlich sinnvoll sein, die Schubleiste niederfrequent oszillieren zu lassen, so dass es sich dabei eher um ein Hin- und Herschieben der Schubleiste quer zur Transportrichtung und damit in paralleler Richtung zur horizontalen Längserstreckungsrichtung der Schubleiste handelt. Auch diese hochfrequenten, insbesondere aber die beschriebenen niederfrequenten oszillierenden Bewegungen der Schubleiste können sich über die Zeit ändern und können bspw. in bestimmten Zeitfenstern einer höherfrequenten Schubleistenbewegung überlagert werden, während in anderen Zeitfenstern lediglich die Vibrationen der Schubleiste erfolgen.

Alle zuvor genannten Bewegungen, Impulse und/oder Vibrationen, die auf die Transportstrecke sowie auf die Schubleiste einwirken können, lassen sich bedarfsweise überlagern. So kann es bspw. von Vorteil sein, wenn die hochfrequenten und/oder niederfrequenten oszillierenden Bewegungen der Schubleiste mit auf die Transportstrecke einwirkenden mechanischen Impulsen und/oder Vibrationen überlagert werden.

Bei dem Verfahren kann vorzugsweise vorgesehen sein, dass die Artikel während ihrer Beförderung auf der Transportstrecke mittels seitlicher Führungsleisten verdichtet und in einer Richtung quer zur Transportrichtung zusammengeschoben werden. Diese seitlichen Führungsleisten befinden sich vorzugsweise an beiden Längsseiten der Transportstrecke, wobei sich ihr Abstand voneinander in Transportrichtung der Artikel zunehmend reduziert, was die Überführung der in Rechteckanordnung beförderten Gruppierung mit den Artikeln in die gewünschte hexagonale Anordnung erleichtert und befördert.

Bei einer Variante des erfindungsgemäßen Verfahrens kann es weiterhin vorteilhaft sein, wenn die Artikel oder Behälter während ihrer geschobenen Beförderung auf der horizontalen Transportstrecke mantelseitig befeuchtet werden. Die Artikel können bspw. mit Wasser besprüht werden, damit sie sich bei wechselseitigen Berührungen ihrer Mantelflächen leichter gegeneinander verschieben lassen, da die Befeuchtung die Reibung bei solchen Relativbewegungen reduzieren kann. Dies gilt außerdem für die Kontaktierung der Artikel mit der Schubleiste und/oder der Auflagefläche, da auch dort eine Befeuchtung die Reibung der aufeinander gleitenden Kontaktflächen reduzieren kann.

Schließlich sollte erwähnt werden, dass sich das erfindungsgemäße Verfahren insbesondere zur Handhabung von Kunststoffbehältern eignet. So kann es sich bei den geschoben beförderten Artikeln insbesondere um Behälter handeln, nämlich insbesondere um Behälter mit biegeweichen Hüllen, vorzugsweise um dünnwandige PET-Behälter. Die hier beschriebenen Effekte durch die mit Impulsen und/oder Vibrationen und/oder niederfrequenten Oszillationsbewegungen beaufschlagten Schubleisten und/oder Transportstrecke kommen insbesondere bei solchen dünnwandigen PET-Behältern zum Tragen, und zwar speziell in solchen Fällen, wenn diese unbegast sind. Unbegaste Getränkebehälter können bspw. nicht karbonisiertes Trinkwasser, Fruchtsäfte etc. mehr enthalten, denen kein Kohlendioxid zugegeben wird, so dass der flüssige Inhalt nicht unter erhöhtem Druck steht. Gemeint sind damit insbesondere PET-Behälter oder PET-Flaschen mit einem Überdruck ihrer Füllung von nicht mehr als ca. 0,1 bar zum Umgebungsdruck.

Bei sehr dünnen und biegeweichen Behälterwänden geben solche unbegasten Kunststoffbehälter auf äußeren Druck stark nach und neigen zur Verformung. Hinzu kommt, dass diese Art von Behältern schlechter aufeinander abgleiten und auch bei gegenseitigem Verschieben im Massenstrom zur Verformung neigen. Diese Nachteile lassen sich mit Hilfe des erfindungsgemäßen Verfahrens allesamt ausgleichen.

Sofern diese aus Sicht des angesprochenen Fachmannes sinnvoll miteinander kombinierbar sind, können einige der oder alle dieser zuvor genannten Variationen oder Ausführungsvarianten des erfindungsgemäßen Verfahrens wahlweise auch miteinander kombiniert werden, um das oben formulierte Ziel der Erfindung zumindest teilweise zu erreichen, und/oder um den gewünschten Effekt der Erfindung zu erzielen.

Es sei an dieser Stelle ausdrücklich erwähnt, dass alle Aspekte und Ausführungsvarianten, die im Zusammenhang mit der erfindungsgemäßen Transportstrecke erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Transportstrecke von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Transportstrecke betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Transportstrecke.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine schematische Draufsicht auf eine erste Ausführungsvariante einer Transportstrecke für Artikel, die mit einer Impulseinleitungseinrichtung ausgestattet ist.
Fig. 1B zeigt eine schematische Draufsicht auf eine zweite Ausführungsvariante der Transportstrecke für Artikel, die mit einer Impulseinleitungseinrichtung ausgestattet ist.
Fig. 2A zeigt eine schematische Seitenansicht eines Teils der Transportstrecke gemäß Fig. 1A.
Fig. 2B zeigt eine schematische Seitenansicht eines Teils der Transportstrecke gemäß Fig. 1B.

Für gleiche oder gleich wirkende Elemente der Erfindung verwendet die nachfolgende Figurenbeschreibung in der Regel jeweils gleiche Bezugsziffern. Ferner werden der Übersicht halber in vielen Fällen nur solche Bezugsziffern in den einzelnen Figuren verwendet, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

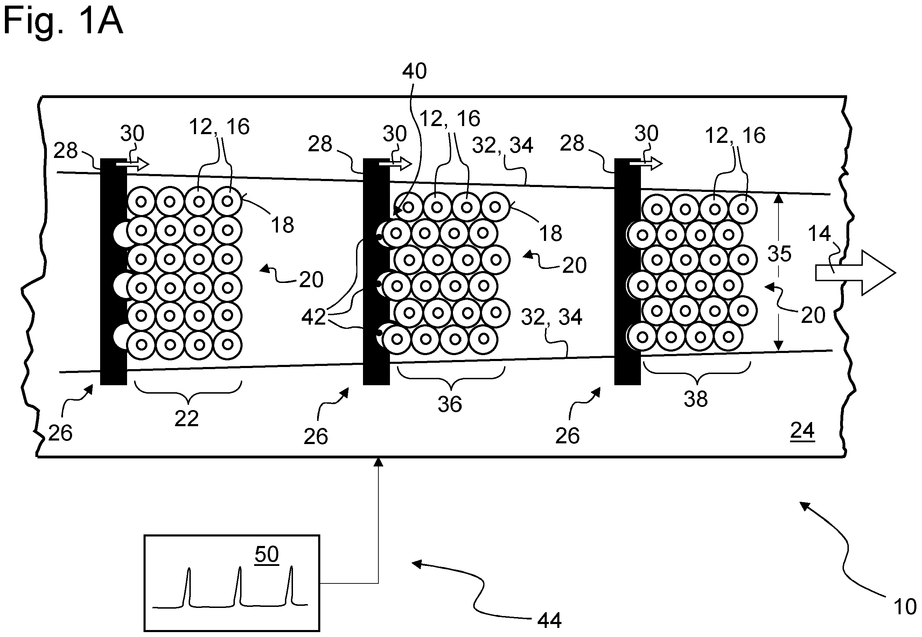

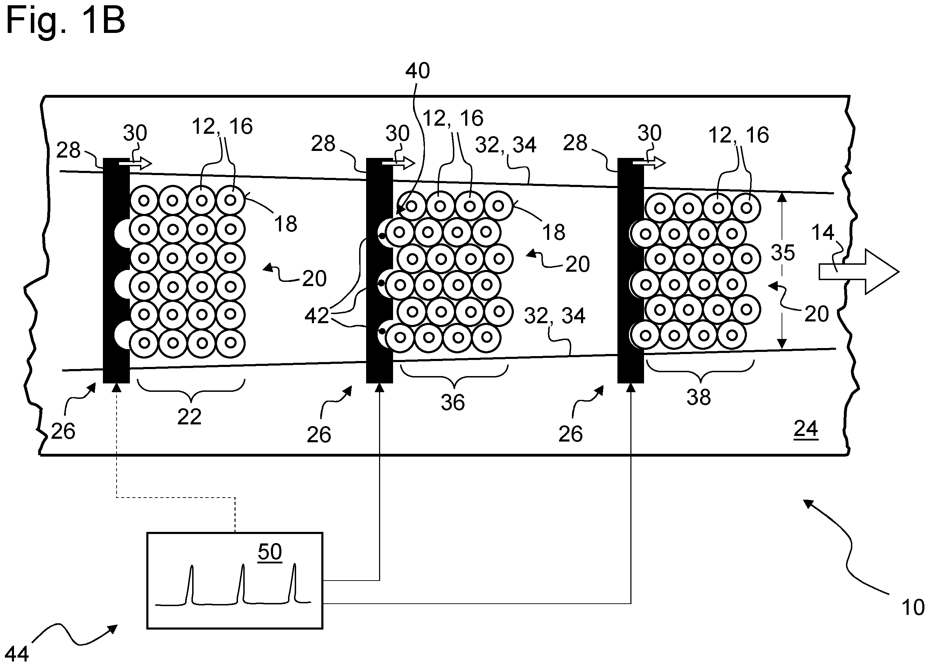

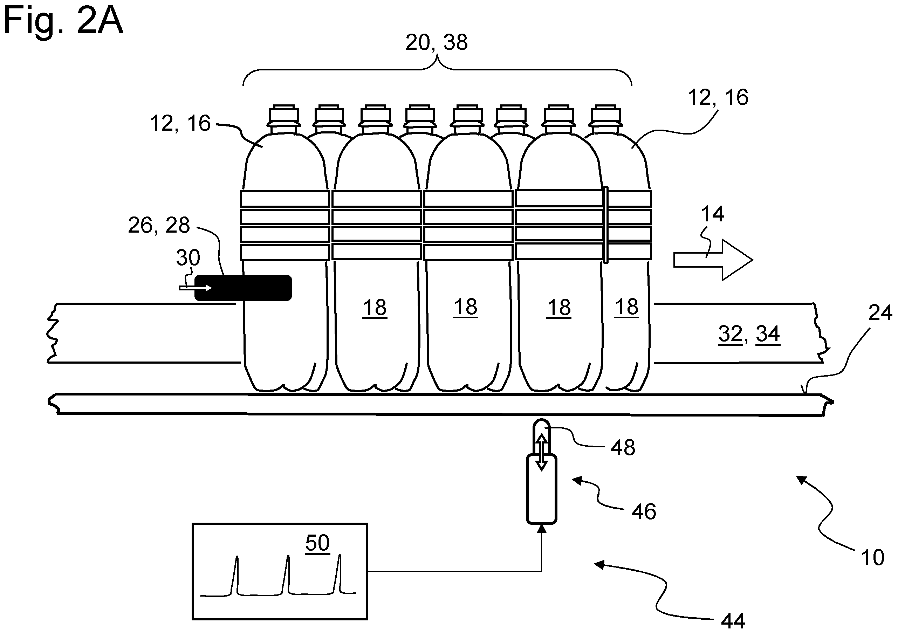

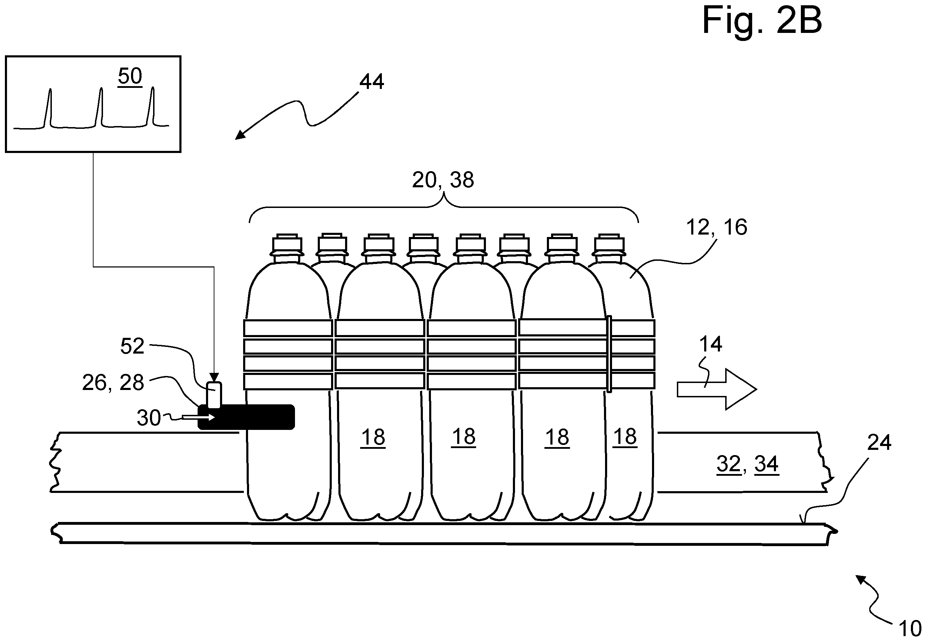

Die schematische Draufsicht der Fig. 1A verdeutlicht die Funktionsweise einer ersten Ausführungsvariante der vorliegenden Erfindung, während die schematische Draufsicht der Fig. 1B eine alternative Ausführungsvariante der Erfindung veranschaulicht. Die schematischen Darstellungen der Figuren 1A und 1B zeigen jeweils einen Ausschnitt einer Transportstrecke 10, auf der eine Vielzahl an gleichartigen Artikeln 12 in horizontaler Richtung in geschobener Weise befördert werden. Eine horizontale Förderrichtung 14 der Artikel 12 auf oder entlang der Transportstrecke 10 weist in der gezeigten Darstellung aller hier beschriebenen Figuren 1A, 1B, 2A und 2B jeweils von links nach rechts.

Die Artikel 12 sind im hier beschriebenen Ausführungsbeispiel jeweils durch Behälter 16 gebildet, die insbesondere mit Getränken oder anderen Flüssigkeiten befüllt sein können, so dass nachfolgend anstelle von Artikeln 12 oftmals von Behältern 16 oder von Getränkebehältern 16 die Rede sein wird. Die Artikel 12 oder Behälter 16 weisen jeweils eine abschnittsweise zylindrische Mantelfläche 18 auf, wie dies insbesondere in den Figuren 2A und 2B deutlich erkennbar ist. Zudem weisen solche Behälter 16 typischerweise flache oder konturierte Behälterböden und sich verjüngende Halsabschnitte mit oberseitigen Schraubdeckeln zum gasdichten Verschließen einer oberen Behälter- oder Ausgießöffnung auf, was ebenfalls in den Figuren 2A und 2B zeichnerisch verdeutlicht ist.

Die Draufsichten der Figuren 1A und 1B verdeutlichen insgesamt drei Artikel- oder Behältergruppierungen 20 mit jeweils vierundzwanzig Artikeln 12 oder Behältern 16, die sich zunächst in einer Rechteckanordnung 22 mit sechs parallelen Reihen zu je vier hintereinander (in Förderrichtung 14) beförderten Artikeln 12 oder Behältern 16. D.h. bei der links befindlichen Gruppierung 20 befinden sich die Artikel 12 oder Behälter 16 zunächst in einer regelmäßigen Rechteckanordnung 22, bei der die Artikel 12 oder Behälter 16 der sechs nebeneinander befindlichen Reihen jeweils miteinander fluchten, und zwar parallel zur Förderrichtung 14 als auch quer zu dieser.

Die in den Figuren 1A und 1B gezeigten drei Artikel- oder Behältergruppierungen 20 sind jeweils voneinander beabstandet. Rückseitig an jeder der gezeigten drei Gruppierungen 20 befindet sich jeweils eine bewegliche Schubeinrichtung 26, wobei diese Schubeinrichtungen 26 hier durch jeweils rückseitig an die Gruppierungen 20 anlegbare profilierte Schubleisten 28 gebildet sind. Die durch die profilierten Schubleisten 28 gebildeten Schubeinrichtungen 26 befinden sich oberhalb der horizontalen Auflageebene 24 und werden jeweils in einer Vorschubrichtung 30 bewegt, die parallel zur Auflageebene 24 sowie zur horizontalen Förderrichtung 14 ist.

Die jeweils in Förderrichtung 14 auf der Auflageebene 24 bewegten Artikel- oder Behältergruppierungen 20 werden zu beiden Seiten von Führungsleisten 32 flankiert, die sich ebenfalls oberhalb der Auflageebene 24 befinden und die für eine seitliche Führung der Gruppierungen 20 bei ihrer Förderbewegung in Förderrichtung 14 sorgen. Die seitlichen Führungsleisten 32 können insbesondere durch Geländerführungen 34 gebildet sein, die eine ausreichende Höhe aufweisen, die sinnvollerweise in einem Bereich oberhalb eines Schwerpunktes der jeweils auf der Transportstrecke 10 beförderten Artikel 12 oder Behälter 16 liegt. Auf diese Weise kann ein Kippen oder Übersteigen der Artikel 12 oder Behälter 16 bei sich in Förderrichtung 14 allmählich reduzierendem Abstand 35 der beiden Geländerführungen 34 voneinander zuverlässig verhindert werden.

Wenn im vorliegenden Zusammenhang von einer Auflageebene 24 für die Artikel 12 oder Behälter 16 bzw. die durch diese gebildeten Gruppierungen 20 die Rede ist, so kann diese entweder eine reibungsarme Oberfläche aufweisen, auf der die gruppierten Artikel 12 oder Behälter 16 gleitend geschoben werden. Wahlweise jedoch kann die Auflageebene 24 auch Bestandteil einer Horizontalfördereinrichtung sein, auf welcher die gruppierten Artikel 12 oder Behälter 16 in Förderrichtung 14 bewegt und währenddessen mittels der Schubeinrichtungen 26 und/oder der Führungsleisten 34 zusätzlich in der nachfolgend beschriebenen Weise umgruppiert werden.

Während sich die in Förderrichtung 14 bewegten Artikel- oder Behältergruppierungen 20 zunächst in einer regelmäßigen Rechteckanordnung 22 befinden, wie dies bei der links befindlichen Gruppierung 20 (Figuren 1A und 1B) der Fall ist, wird im Förderverlauf dafür gesorgt, dass sich die Artikel 12 oder Behälter 16 einander weiter annähern, was nur durch eine Relativverschiebung der Artikel 12 oder Behälter 16 zueinander unter Auflösung der Rechteckanordnung 22 erfolgen kann. So sind die Artikel 12 oder Behälter 16 der mittig gezeigten Gruppierung 20 (Figuren 1A und 1B) derart gegeneinander geschoben und verdichtet, dass sie eine verdichtete Kugelpackung 36 bilden.

Hierbei fluchten zwar die insgesamt vier Artikel 12 oder Behälter 16 jeder der sechs nebeneinander befindlichen Reihen in der Gruppierung 20 noch immer, doch sind die Reihen leicht in einer Richtung parallel zur Förderrichtung 14 gegeneinander verschoben sowie auch in einer Richtung quer zur Förderrichtung 14 zusammengeschoben. Die Verschiebung der jeweils benachbarten Reihen der Gruppierung 20 in paralleler Richtung zur Förderrichtung 14 beträgt bei der mittig dargestellten verdichteten Kugelpackung 36 etwas weniger als einem halben Artikel- oder Behälterdurchmesser. Die Annäherung der jeweils benachbarten Reihen der Gruppierung 20 quer zur Förderrichtung 14 ist gering, aber bereits erkennbar, auch wenn es sich bei den Figuren 1A und 1B um schematische Darstellungen handelt.

Diese Annäherung der Artikel 12 oder Behälter 16, um die Gruppierung 20 von einer Rechteckanordnung 22 in die gezeigte verdichtete Kugelpackung 36 zu überführen, erfolgt durch eine Zusammenwirkung der Führungsleisten, deren Abstände 36 voneinander sich in Förderrichtung 14 reduzieren, mit den rückseitig an die jeweiligen Artikel- oder Behältergruppierungen 20 angreifenden Schubeinrichtungen 26. Auch eine nicht profilierte Schubleiste 28 könnte im Zusammenhang mit den sich in ihren Abständen 36 auf eine maximale Breite der angestrebten Kugelpackung 36 der Gruppierung 20 verjüngenden Führungsleisten 32 für die gewünschte Verdichtung der Artikel 12 oder Behälter 16 zueinander in den beförderten Gruppierungen 20 sorgen.

Im weiteren Förderverlauf wird die verdichtete Kugelpackung 36, wie dies in der mittigen Gruppierung 20 in den Figuren 1A und 1B jeweils gezeigt ist, in eine dichtest mögliche Kugelpackung oder hexagonale Anordnung 38 überführt, bei der eine weitere Annäherung der Artikel 12 oder Behälter 16 innerhalb der Gruppierung 20 nicht mehr möglich ist. Diese in hexagonaler Anordnung 38 befindliche Gruppierung 20 ist in den Draufsichten der Figuren 1A und 1B jeweils rechts gezeigt.

Hierbei fluchten die insgesamt vier Artikel 12 oder Behälter 16 jeder der sechs nebeneinander beförderten Reihen in der Gruppierung 20 weiterhin, doch sind die Reihen nunmehr so weit in paralleler Richtung zur Förderrichtung 14 gegeneinander verschoben, dass diese Verschiebung der jeweils benachbarten Reihen der Gruppierung 20 einem halben Artikel- oder Behälterdurchmesser entspricht. Die Annäherung der jeweils benachbarten Reihen der Gruppierung 20 quer zur Förderrichtung 14 ist deutlich geringer, wodurch der verbleibende Raum zwischen den sich jeweils in Linienberührung kontaktierenden Artikeln 12 oder Behältern 16 minimiert ist.

Die jeweils rückseitig an den Gruppierungen 20 anliegende Profilierung 40 jeder der gezeigten Schubleisten 28 ist so gestaltet, dass in Draufsicht drei voneinander beabstande halbrundförmige Aussparungen 42 sich derart an jeweils einen Artikel 12 oder Behälter 16 anlegen können, dass dieser in etwa zur Hälfte in die Aussparung 42 eintauchen kann, während die jeweils zwischen benachbarten Aussparungen 42 befindlichen Schubleistenbereiche für das versetzte Verschieben jeder zweiten Reihe der Gruppierung 20 sorgen, so dass jeweils benachbarte Reihen der Gruppierungen 20 in der gezeigten Weise um den Betrag eines halben Artikel- oder Behälterdurchmessers gegeneinander verschoben werden. Dies sorgt in Zusammenwirkung mit der sich verjüngenden Transportgasse, die durch den sich reduzierenden Abstand 35 der beiden Führungsleisten 32 oder Geländerführungen 34, zwischen denen sich die Gruppierungen 20 bewegen, gebildet wird, für die gewünschte Umgruppierung der Rechteckanordnungen 22 in die hexagonalen Anordnungen 38.

Wie es die schematischen Seitenansichten der Figuren 2A und 2B erkennen lassen, befinden sich die durch die Schubleisten 28 gebildeten Schubeinrichtungen 26 oberhalb der Führungsleisten 32 oder Geländerführungen 34, wobei der vertikale Abstand zwischen den Oberkanten der Geländerführungen 34 und der Unterseite der jeweiligen Schubleiste 28 wahlweise sehr gering ausfallen kann. Die Höhe der Schubleisten 28, d.h. ihr vertikaler Abstand von der Auflageebene 24 ist sinnvollerweise so zu wählen, dass die jeweils an den Artikeln 12 oder Behältern 16 der jeweiligen Gruppierung 20 anliegende Schubleiste 28 bei ihrer Vorschubbewegung in Vorschubrichtung 30 ungefähr in Höhe des Massenschwerpunktes der Artikel 12 oder Behälter 16 angreift. Wahlweise kann die Eingriffshöhe der Schubleiste 28 geringfügig unterhalb oder oberhalb des Massenschwerpunktes der geschobenen Artikel 12 oder Behälter 16 liegen.

Sofern es sich bei den Artikeln 12 oder Behältern 16 um solche mit biegeweichen Hüllen handelt, wie dies etwa bei dünnwandigen PET-Behältern der Fall ist, neigen die Hüllen bei einer Kontaktierung durch andere Behälter 16 und/oder bei Kontaktierungen durch die Behälter 16 schiebende Einrichtungen, die an deren Mantelflächen 18 angreifen, mehr oder weniger stark zum Ausweichen und Nachgeben. Diese potenziell auftretenden Verformungseffekte der sich untereinander kontaktierenden und/oder von der profilierten Schubleiste 28 kontaktierten Artikel 12 oder Behälter 16 können sich mit anderen Effekten überlagern, etwa einem Aneinanderhaften von sich an ihren Mantelflächen 18 berührenden benachbarten Behältern 16. Dieses Aneinanderhaften der sich in Linienberührung an ihren Mantelflächen 18 kontaktierenden Artikeln 12 oder Behältern 16 kann einerseits durch die Oberflächeneigenschaften des verwendeten Behältermaterials begünstigt werden, nämlich insbesondere durch einen vergleichsweise hohen Haftreibungskoeffizienten des für die Artikel 12 oder Behälter 16 oftmals verwendeten PET-Materials.

Hinzu können jegliche Haftungseffekte im Zusammenhang mit ggf. an den Behältermantelflächen 18 befindlichen Beschichtungen, Etikettierungen oder Verunreinigungen treten, die sich wiederum mit den schon genannten Effekten überlagern können. Insbesondere Verunreinigungen an den Mantelflächen 18 der Behälter 16 können zu starken Haftungseffekten beitragen, etwa anhaftende und/oder teilweise getrocknete Reste von zuckerhaltiger Flüssigkeit, die bei der Abfüllung der Behälter 16 verschüttet wurde.

Da zudem die Artikel 12 oder Behälter 16 bei ihrer Umgruppierung innerhalb der jeweiligen Gruppierung 20 aus der Rechteckanordnung 22 (in den Figuren 1A und 1B jeweils links dargestellt) über die verdichtete Kugelpackung 36 (in den Figuren 1A und 1B jeweils mittig dargestellt) in die dichteste Packung der hexagonalen Anordnung 38 (in den Figuren 1A und 1B jeweils rechts dargestellt) nur in geringem Umfang mit ihren Mantelflächen 18 aneinander abwälzen können, da Impulse für entsprechende Drehbewegungen fehlen, gleiten sie bei den beschriebenen Umgruppierungen zwangsläufig aneinander. Alle diese Gleitbewegungen der Artikel 12 oder Behälter 16 jeweils benachbarter Reihen innerhalb der Gruppierung unterliegen potenziell allen oben beschriebenen negativen Einflüssen, was generell zum unerwünschten Ergebnis einer nicht erreichten hexagonalen Anordnung 38 führen kann.

Ein Weitertransport einer Gruppierung 20, bei der die Artikel- oder Behälteranordnung von der angestrebten hexagonalen Anordnung 38 deutlich abweicht, kann zu Problemen und zu Störungen im weiteren Artikelhandling sorgen, etwa bei der Verpackung und/oder der Palettierung einer solchen Anordnung.

Um diese Probleme zuverlässig vermeiden zu können, ist der Transportstrecke 10 eine Impulseinleitungseinrichtung 44 zugeordnet, die in einer Weise ausgebildet ist, dass sie mechanische Impulse erzeugen und diese in geeigneter Weise auf die beförderten Gruppierungen 20 lassen kann, so dass die Umgruppierung der Rechteckanordnungen 22 in die angestrebten hexagonalen Anordnungen 38 möglichst zuverlässig und störungsfrei erfolgen kann.

Gemäß der in Fig. 1A gezeigten ersten Ausführungsvariante der erfindungsgemäßen Transportstrecke 10 kann die Impulseinleitungseinrichtung 44 mit der Auflageebene 24 zusammenwirken und entweder einzelne oder wiederholte mechanische Impulse in diese einleiten, um mittels der solchermaßen generierten Erschütterungen die Artikel 12 oder Behälter 16 leichter und besser zueinander und gegeneinander verschieben zu können. Wenn die Auflageebene 24 oder zumindest Bereiche der Auflageebene 24 solchen mechanischen Impulsen ausgesetzt wird, führt dies zu plötzlichen geringfügigen Formänderungen, die aufgrund ihres plötzlichen und impulsartigen Charakters zu einer Erschütterung der auf der Auflageebene 24 entlanggleitenden oder dort transportierten Artikel 12 oder Behälter 16 führen, was wiederum deren Ineinandergleiten in die angestrebte hexagonale Anordnung 38 erleichtert.

Die impulsartigen Erschütterungen, die durch die Auflageebene 24 auf die Artikel 12 oder Behälter 16 übertragen werden, sorgen im Idealfall bei auftretenden Haftungseffekten zwischen den Mantelflächen 18 einzelner Artikel 12 oder Behälter 16 für deren Neutralisierung. Aus dem Gesagten wird deutlich, dass die von der Impulseinleitungseinrichtung 44 erzeugten und in die Auflageebene 24 eingeleiteten Impulse zumindest solche Amplituden und solche Amplitudensteigungen aufweisen sollten, die für ein kurzzeitiges Abheben der Artikel 12 oder Behälter 16 von der Auflageebene 24 oder zumindest für kleine Verschiebungen benachbarter Artikel 12 oder Behälter 16 gegeneinander mit einer ausreichenden vertikalen Richtungskomponente sorgen können, wodurch die beschriebenen Haftungseffekte zu überwinden sind.

Die Impulseinleitungseinrichtung 44 kann bspw. einen motorisch angetriebenen rotierenden Nocken oder mehrere solcher rotierenden Nocken umfassen, die einen mechanischen Impulsüberträger bilden, der mit der horizontalen Auflageebene 24 gekoppelt sein kann, bspw. indem er regelmäßig an einer Unterseite der flachen Auflageebene 24 anschlägt und solchermaßen die mechanischen Impulse in diese einleitet. Die Antriebsgeschwindigkeit des motorischen Antriebes definiert hierbei die Frequenz der Impulse.

Wahlweise kann die Impulseinleitungseinrichtung 44 auch einen elektromagnetisch oder elektromotorisch betriebenen Linearantrieb 46 umfassen, der mit einem oszillierend beweglichen Impulsüberträger in Gestalt eines Stößels 48 o. dgl. ausgestattet ist, der in einer Weise mit der horizontalen Auflageebene 24 gekoppelt sein kann, dass der Stößel 48 in gewünschter Weise, d.h. mit einer einstellbaren Frequenz und Impulsstärke an die Unterseite der flachen Auflageebene 24 anschlägt und dort die mechanischen Impulse einleitet. Die Impulse, ihre Häufigkeit und ihre Stärke können von einem den Linearantrieb 46 ansteuernden Impulsgenerator 50 generiert werden, der bspw. Bestandteil einer übergeordneten Steuerungseinrichtung (hier nicht gezeigt) sein kann.

Die schematische Seitenansicht der Fig. 2A verdeutlicht eine solche Konfiguration mit dem unterhalb der Auflageebene 24 angeordneten Linearantrieb 46, dessen Stößel 48 von unten an die Auflageebene 24 anschlagen kann, wobei die Ansteuerung des Linearantriebes 46 vorzugsweise mittels des schematisch angedeuteten Impulsgenerators 50 erfolgen kann.

Die Figuren 2A und 2B zeigen zudem eine sinnvolle Dimensionierung der seitlichen Führungsleisten 32, gebildet durch die Geländerführungen 34, sowie die oberhalb dieser Führungsleisten 32 in Vorschubrichtung 30 bewegte profilierte Schubleiste 28 der Schubeinrichtung 26, welche die gezeigte Behältergruppierung 20 während ihrer Vorschubbewegung in Förderrichtung 14 bereits in die hexagonale Anordnung 38 gebracht hat.

Die Profilierung 40 der Schubleiste 28 ist dadurch angedeutet, dass der von der Schubleiste 28 erfasste Behälter 16 mit seinem halben Behälterdurchmesser in die entsprechende Aussparung 42 der Profilierung 40 eintaucht.

Gemäß der in Fig. 1B gezeigten zweiten Ausführungsvariante der erfindungsgemäßen Transportstrecke 10 kann die Impulseinleitungseinrichtung 44 auch mit den Schubleisten 28 der Schubeinrichtung 26 zusammenwirken und entweder einzelne oder wiederholte mechanische Impulse in diese einleiten, um mittels der solchermaßen generierten Erschütterungen die Artikel 12 oder Behälter 16 leichter und besser zueinander und gegeneinander verschieben zu können. Wenn die Schubleisten 28 während ihrer Vorschubbewegungen solchen mechanischen Impulsen ausgesetzt werden, können damit insbesondere oszillierende Bewegungen der Schubleisten 28 in vertikaler und/oder in horizontaler oder auch in unterschiedliche Richtungen gemeint sein.

Die Wirkungsweise solcher in die Schubleisten 28 eingeleiteten mechanischen Impulse ist dergestalt, dass zumindest die von der profilierten Schubleiste 28 kontaktierten Artikel 12 oder Behälter 16 erschüttert werden, was wiederum das Ineinandergleiten der gesamten Gruppierung 20 in die angestrebte hexagonale Anordnung 38 erleichtert.

Die impulsartigen Erschütterungen, die durch die Schubleisten 28 auf die Artikel 12 oder Behälter 16 übertragen werden, sorgen im Idealfall bei auftretenden Haftungseffekten zwischen den Mantelflächen 18 einzelner Artikel 12 oder Behälter 16 für deren Abschwächung oder Neutralisierung. Aus dem Gesagten wird deutlich, dass die von der Impulseinleitungseinrichtung 44 erzeugten und in die Schubleisten 28 eingeleiteten Impulse zumindest solche Amplituden und solche Amplitudensteigungen aufweisen sollten, die für ein kurzzeitiges Ablösen der Artikel 12 oder Behälter 16 von der sie schiebend befördernden Schubleiste 28 und im Idealfall zumindest für kleine Verschiebungen benachbarter Artikel 12 oder Behälter 16 gegeneinander mit einer ausreichenden horizontalen Richtungskomponente sorgen können, wodurch die beschriebenen Haftungseffekte zu überwinden sind.

Die Impulseinleitungseinrichtung 44 kann bspw. einen motorisch angetriebenen rotierenden Nocken oder mehrere solcher rotierenden Nocken umfassen, die einen mechanischen Impulsüberträger bilden, der mit der jeweiligen Schubleiste 28 gekoppelt sein kann, bspw. indem er regelmäßig an einer Stirnseite der flachen Schubleiste 28 anschlägt und solchermaßen die mechanischen Impulse in diese einleitet. Die Antriebsgeschwindigkeit des motorischen Antriebes definiert hierbei die Frequenz der Impulse.

Wahlweise kann die Impulseinleitungseinrichtung 44 auch einen elektromagnetisch oder elektromotorisch betriebenen Linearantrieb umfassen, wie er in Fig. 2B schematisch gezeigt ist. Ein solcher Linearantrieb kann bspw. mit einem oszillierend beweglichen Impulsüberträger 52 in Gestalt eines Stößels o. dgl. ausgestattet sein, der in einer Weise mit der horizontalen Schubleiste 28 gekoppelt sein kann, dass der Stößel (in Fig. 2B nicht gezeigt) in gewünschter Weise, d.h. mit einer einstellbaren Frequenz und Impulsstärke an die Schubleiste 28, z.B. an ihre Stirnseite, anschlägt und dort die mechanischen Impulse einleitet. Die Impulse, ihre Häufigkeit und ihre Stärke können von einem den Linearantrieb ansteuernden Impulsgenerator 50 generiert werden, der bspw. Bestandteil einer übergeordneten Steuerungseinrichtung (in Fig. 2B ebenfalls nicht gezeigt) sein kann.

Wie es die Fig. 1B in schematischer Weise andeutet, ist die Aktivierung der mit den Schubleisten 28 zusammenwirkenden Impulseinleitungseinrichtung 44 zumindest während der Überführung der Gruppierung 20 in die verdichtete Kugelpackung 36 sinnvoll, zudem während des weiteren Vorschubs, um die Gruppierung 20 in die hexagonale Anordnung 38 zu bringen, was durch die beiden Signalübertragungspfeile vom Impulsgenerator 50 zur rechten Schubleiste 28 und zur mittleren Schubleiste 28 angedeutet ist. Dagegen ist die Aktivierung der Impulseinleitungseinrichtung 44 bei der erst an die in Rechteckanordnung 22 befindlichen linken Gruppierung 20 noch nicht zwingend erforderlich, was durch den unterbrochen linierten Signalübertragungspfeil vom Impulsgenerator 50 zur linken Schubleiste 28 verdeutlicht ist.

Die schematische Seitenansicht der Fig. 2B verdeutlicht eine Konfiguration mit einem mit der Schubleiste 28 zusammenwirkenden Impulsüberträger 52, dessen Stößel oder dessen rotierende Nocke an geeigneter Stelle an die Schubleiste 28 anschlagen kann, wobei die Ansteuerung des Impulsüberträgers 52 vorzugsweise mittels des schematisch angedeuteten Impulsgenerators 50 erfolgen kann.

Es sei an dieser Stelle ergänzend betont, dass die in den Figuren 1A bis 2B gezeigten alternativen Varianten der Impulseinleitung auch problemlos miteinander kombiniert werden können, da es bspw. durchaus sinnvoll sein kann, sowohl in die Auflageebene 24 als auch in die Schubleisten 28 jeweils mechanische Impulse einzuleiten. Hierbei ist keine synchrone Impulseinleitung notwendig; im Gegenteil kann eine asynchrone Impulseinleitung mit unterschiedlichen und voneinander abweichenden Zeitpunkten der Impulse in den Schubleisten 28 bzw. in der Auflageebene 24 sinnvoll sein und zu verbesserten Effekten führen.

Wenn zudem oben von wiederholten mechanischen Impulsen gesprochen wurde, die mittels der Impulseinleitungseinrichtung 44 in die Auflageebene 24 und/oder in die Schubleisten 28 eingeleitet werden können, so können damit auch Vibrationen gemeint sein, die in der Regel als wiederholte Impulse mit temporär gleichbleibender Frequenz und temporär gleichbleibender Amplitude verstanden werden. Da die wiederholten mechanischen Impulse jedoch bedarfsweise mit im Zeitablauf wechselnden Frequenzen sowie mit im Zeitablauf unterschiedlichen Amplituden eingeleitet werden können, wäre in diesem Fall von Vibrationen mit schwankender Frequenz und wechselnder Stärke zu sprechen.

Die in den Seitenansichten der Figuren 2A und 2B gezeigten und jeweils in Vorschubrichtung 30 parallel zur Auflageebene 24 und parallel zur Förderrichtung 14 bewegten Schubleisten 28 können bspw. an ihren beiden Stirnseiten in endlos umlaufenden Zugmittelantrieben gelagert sein, bspw. in Kettenantrieben, die für eine äquidistante Beförderung der in den Figuren 1A und 1B in Draufsichten gezeigten Gruppierungen 20 sorgen können, wobei die Schubleisten 28 entlang eines definierten Abschnittes der Transportstrecke 10 in Eingriff mit den zu schiebenden Gruppierungen 20 treten können, während sie vor diesem definierten Abschnitt in den Eingriffsbereich mit den Artikeln 12 oder Behältern 16 hinabtauchen und nach dem Durchlaufen des definierten Abschnittes wieder nach oben hinausgehoben werden, um oberhalb der Transportstrecke 10 wieder zurückzulaufen.

Das Prinzip eines solchen Zugmittelantriebes für mehrere daran gelagerte Schubleisten 28 kann bspw. der Fig. 8 der deutschen Offenlegungsschrift DE 10 2010 033 549 A1 sowie der zugehörigen Beschreibungsteile entnommen werden, findet sich jedoch auch an anderer Stelle dieses Dokuments beschrieben.

Die hier beschriebene Transportstrecke 10 ist grundsätzlich in ihrer Länge nicht begrenzt. Sinnvollerweise handelt es sich jedoch um einen längenmäßig begrenzten Transportabschnitt, da es sich bei dem Eingriffsbereich der Schubeinrichtung 26, in dem diese mit den umzugruppierenden Artikel- oder Behältergruppierungen 20 zusammenwirkt, um einen definierten und in seiner Länge normalerweise begrenzten Abschnitt handelt. Insofern kann der hier verwendete Begriff der Transportstrecke 10 als gesamter Eingriffsbereich oder als Teilabschnitt eines solchen Eingriffsbereichs betrachtet werden, in dem die auf der Auflageebene 24 beförderten Artikel 12 oder Behälter 16 mit den Schubleisten 28 der Schubeinrichtung 26 zusammenwirken.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Transportstrecke
- 12: Artikel
- 14: Förderrichtung, horizontale Förderrichtung
- 16: Behälter, Getränkebehälter
- 18: Mantelfläche
- 20: Gruppierung, Artikelgruppierung, Behältergruppierung
- 22: Rechteckanordnung
- 24: Auflageebene
- 26: Schubeinrichtung
- 28: Schubleiste
- 30: Vorschubrichtung
- 32: Führungsleiste
- 34: Geländerführung
- 35: Abstand
- 36: verdichtete Kugelpackung
- 38: hexagonale Anordnung
- 40: Profilierung
- 42: Aussparung
- 44: Impulseinleitungseinrichtung
- 46: Linearantrieb
- 48: Stößel
- 50: Impulsgenerator
- 52: Impulsüberträger

## Patentansprüche

1. Transportstrecke (10) zur geschobenen Beförderung einer Vielzahl von gleichartigen Artikeln (12),
- mit einer für einen mehrreihigen Transport der Artikel (12) vorgesehenen horizontalen Auflageebene (24), und
- mit einer oberhalb der und in etwa parallel zur horizontalen Auflageebene (24) in einer Transportrichtung (14) der Artikel (12) beweglichen Schubeinrichtung (26) zur rückseitigen Anlage an die Artikel (12) und zur Erzeugung einer auf die Artikel (12) einwirkenden Vorschubbewegung in Transportrichtung (14),
wobei der Transportstrecke (10) eine Impulseinleitungseinrichtung (44) zur Einleitung von mechanischen Impulsen zumindest in Teilbereiche der horizontalen Auflageebene (24) und/oder in die Schubeinrichtung (26) zugeordnet ist.

2. Transportstrecke (10) nach Anspruch 1, bei welcher die Impulseinleitungseinrichtung (44) zur Einleitung von einzelnen mechanischen Impulsen zumindest in Teilbereiche der horizontalen Auflageebene (24) vorgesehen und entsprechend ausgestattet ist.

3. Transportstrecke (10) nach Anspruch 1 oder 2, bei welcher die Impulseinleitungseinrichtung (44) zur Einleitung von einzelnen mechanischen Impulsen zumindest in die Schubeinrichtung (26) vorgesehen und entsprechend ausgestattet ist.

4. Transportstrecke (10) nach einem der Ansprüche 1 bis 3, bei welcher die Impulseinleitungseinrichtung (44) zur Einleitung von wiederholten mechanischen Impulsen und/oder von Vibrationen zumindest in Teilbereiche der horizontalen Auflageebene (24) und/oder in die Schubeinrichtung (26) vorgesehen und entsprechend ausgestattet ist.

5. Transportstrecke (10) nach einem der Ansprüche 1 bis 4, bei welcher die Impulseinleitungseinrichtung (44) einen angetriebenen rotierenden Nocken mit einem mechanischen Impulsüberträger (52) umfasst, der mit der horizontalen Auflageebene (24) und/oder mit der Schubeinrichtung (26) gekoppelt ist.

6. Transportstrecke (10) nach einem der Ansprüche 1 bis 5, bei welcher die Impulseinleitungseinrichtung (44) einen elektromagnetisch oder elektromotorisch betriebenen Linearantrieb (46) umfasst, der mit einem oszillierend beweglichen Impulsüberträger (52) zusammenwirkt, welcher mit der horizontalen Auflageebene (24) und/oder mit der Schubeinrichtung (26) gekoppelt ist.

7. Transportstrecke (10) nach einem der Ansprüche 1 bis 6, welcher an ihren beiden Längsseiten jeweils Führungsleisten (32) zugeordnet sind, deren Abstand (35) sich in Transportrichtung (14) der Artikel (12) reduziert.

8. Verfahren zur geschobenen Beförderung einer Vielzahl von gleichartigen Artikeln (12) entlang einer horizontalen Transportstrecke (10) mittels wenigstens einer rückseitig an den Artikeln (12) anliegenden und diese in eine Transportrichtung (14) schiebenden beweglichen Schubleiste (28), die für eine Verbringung der mehrreihig auf der Transportstrecke (10) beförderten Artikel (12) in eine hexagonale Anordnung (38) zueinander sorgen kann, wobei in eine Auflageebene (24) der Transportstrecke (10) und/oder in die Schubleiste (28) zumindest einzelne mechanische Impulse eingeleitet werden.

9. Verfahren nach Anspruch 8, bei dem in die Auflageebene (24) der Transportstrecke (10) und/oder in die Schubleiste (28) wiederholte mechanische Impulse und/oder Vibrationen eingeleitet werden.

10. Verfahren nach Anspruch 8 oder 9, bei dem die in die Auflageebene (24) der Transportstrecke (10) und/oder in die Schubleiste (28) eingeleiteten mechanischen Impulse und/oder Vibrationen im Zeitablauf ihre Wiederholfrequenz und/oder ihre Impulsstärke verändern.

11. Verfahren nach einem der Ansprüche 8 bis 10, bei dem die Schubleiste (28) in einer Richtung quer zur Transportrichtung (14) oszillierend bewegt wird.

12. Verfahren nach einem der Ansprüche 8 bis 11, bei dem die oszillierenden Bewegungen der Schubleiste (28) mit auf die Transportstrecke (10) einwirkenden mechanischen Impulsen und/oder Vibrationen überlagert werden.

13. Verfahren nach einem der Ansprüche 8 bis 12, bei dem die Artikel (12) während ihrer Beförderung auf der Transportstrecke (10) mittels seitlicher Führungsleisten (32) verdichtet und in einer Richtung quer zur Transportrichtung (14) zusammengeschoben werden, welche seitlichen Führungsleisten sich an beiden Längsseiten der Transportstrecke (10) befinden, wobei sich ihr Abstand (35) voneinander in Transportrichtung (14) der Artikel (12) zunehmend reduziert.

14. Verfahren nach einem der Ansprüche 8 bis 13, bei welchem die Artikel (12) während ihrer geschobenen Beförderung auf der horizontalen Transportstrecke (10) mantelseitig befeuchtet werden.

15. Verfahren nach einem der Ansprüche 8 bis 14, wobei es sich bei den geschoben beförderten Artikeln (12) um Behälter (16) handelt, insbesondere um Behälter (16) mit biegeweichen Hüllen, vorzugsweise um dünnwandige PET-Behälter (16).
